(19) Europäisches Patentamt

European Patent Office

Office européen des brevets

(11) Veröffentlichungsnummer: **0 447 621 B1**

(12) **EUROPÄISCHE PATENTSCHRIFT**

(45) Veröffentlichungstag der Patentschrift: **16.08.95**

(51) Int. Cl.⁶: **G02F 1/1345**, G02F 1/1333

(21) Anmeldenummer: **90121522.8**

(22) Anmeldetag: **10.11.90**

(54) **Flüssigkristallanzeigevorrichtung.**

(30) Priorität: **21.03.90 DE 4009058**

(43) Veröffentlichungstag der Anmeldung:
**25.09.91 Patentblatt 91/39**

(45) Bekanntmachung des Hinweises auf die
Patenterteilung:
**16.08.95 Patentblatt 95/33**

(84) Benannte Vertragsstaaten:
**DE FR GB IT NL**

(56) Entgegenhaltungen:
**EP-A- 0 208 078
EP-A- 0 224 040
DE-A- 3 300 264
GB-A- 2 032 127
US-A- 4 326 776**

**PATENT ABSTRACTS OF JAPAN, vol. 11, no.
298 (P-620)(2745) 26. September 1987 ; &
JP-A-62 090 625**

(73) Patentinhaber: **Licentia Patent-Verwaltungs-
GmbH
Theodor-Stern-Kai 1
D-60596 Frankfurt (DE)**

(72) Erfinder: **Bloch, Werner, Dipl.-Phys.
Körnerstrasse 14
W-7322 Eislingen/Fils (DE)**

(74) Vertreter: **Amersbach, Werner, Dipl.-Ing. et al
Licentia Patent-Verwaltungs-GmbH
Theodor-Stern-Kai 1
D-60596 Frankfurt (DE)**

**Beschreibung**

Die vorliegende Erfindung betrifft eine Flüssigkristallanzeigevorrichtung nach dem Oberbegriff des Patentanspruchs 1.

Flüssigkristallanzeigevorrichtungen der vorgenannten Art sind z.B. aus der EP- 146 285 A3 bekannt. Die Leiterbahnen zu den Steuerelektroden befinden sich hier in der gleichen Ebene wie die Steuerelektroden und verlaufen in Zwischenräumen zwischen den Steuerelektroden. Da die Abstände zwischen den Steuerelektroden nicht zu groß werden sollen, was eine Verschlechterung des Auflösungsvermögens der Anzeige bewirkt, sind die Leiterbahnen sehr schmal ausgeführt. Hierdurch ergeben sich insbesondere bei größerflächigen Anzeigen störende Zuleitungswiderstände der Leiterbahnen.

Weiterhin ergibt sich dadurch zwangsläufig eine Begrenzung der Anzahl der Leiterbahnen und damit auch eine Begrenzung der Anzahl der Steuerelektroden.

Auch ist es bekannt Flüssigkristallanzeigen insbesondere in Matrixausführungen anstatt statisch im Multiplexverfahren anzusteuern um die Anzahl von Zuleitungen zu verringern. Bei größeren Anzeigeflächen treten hierbei Kontrastschwierigkeiten auf.

Aus der DE-A-33 00 264 ist eine Anzeigevorrichtung mit durchkontaktierten Elektroden bekannt. Ein Mehrschichtkeramikträger wird verwendet, in dessen Bohrungen Kontaktstifte eingelegt sind. Eine Schirmschicht ist aus der EP-A-208078 bekannt. In der EP-A-208078 finden sich keine Hinweise zur Potential gebung dieser Schirmschicht.

Der vorliegenden Erfindung liegt die Aufgabe zugrunde eine eingangs genannte Anzeigevorrichtung dahingehend zu verbessern, daß sie großflächig mit einer erhöhten Anzahl von Steuerelektroden versehen werden kann, wobei die Steuerelektroden einen minimalen Abstand voneinander besitzen können, daß andererseits die Zuleitungswiderstände der Leitungsbahnen verringert werden, daß ein statischer Ansteuerbetrieb auch bei hoher Bildpunktanzahl ermöglicht wird, daß der Zusammenbau der beiden Substrate vereinfacht wird, da für die seitliche Ausrichtung der beiden Substrate zueinander die Montage-Toleranzen ohne störende Auswirkung auf die Bildpunktform bleibend und daß

Bereiche, die nicht durch Steuerelektroden bedeckt sind, aber dennoch im Sichtfeld liegen, abgeschirmt werden, um so sicherzustellen, daß an diesen Stellen keine unerwünschten Anzeigen erfolgen.

Diese Aufgabe wird durch die im Kennzeichen des Patentanspruchs 1 angegebenen Merkmale gelöst.

Die beschriebene Vorrichtung weist eine hochauflösende und kontrastreiche Anzeige auf. Sie läßt sich anstatt im Multiplexbetrieb auch statisch betreiben, da jeder Steuerelektrode eine Zuleitung zugeordnet werden kann, die infolge einer größermöglichen Breite geringe Leitungswiderstände aufweisen. Der Zusammenbau der beiden Substrate läßt sich wesentlich vereinfachen, wenn eine durchgehende Rückelektrode verwendet wird, da dann Toleranzen bezüglich der seitlichen Ausrichtung ohne Belang auf die Gestalt der Bildpunkte sind.

Während bei bekannten Anordnungen mit stärker strukturierten Rückelektroden die Gefahr von unerwünschten Kreuzungen zwischen spannungsführenden Elektroden infolge von Montageabweichungen besteht, werden bei den erfindungsmäßigen Anordnungen solche unerwünschte Überkreuzungen weitgehend vermieden.

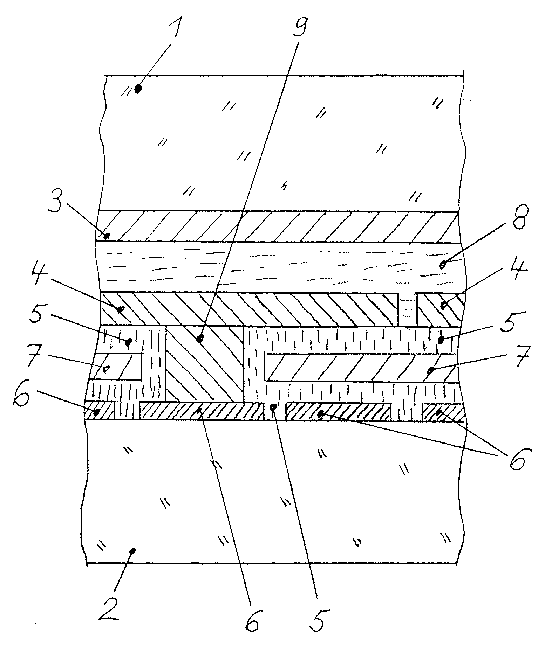

Anhand des in der Figur dargestellten schematischen Querschnitts durch eine erfindungsgemäße Flüssigkristall-Anzeigevorrichtung wird die Erfindung nachfolgend näher erklärt.

Die Figur zeigt zwei bevorzugt aus Glasscheiben bestehende Substrate 1 und 2. Auf dem Substrat 2 sind die als Zuleitungen ausgebildeten Leiterbahnen 6 und die Steuerelektroden 4 jeweils in einer, parallel zu den Substraten 1 und 2 verlaufenden Ebene angeordnet. Beide Ebenen sind voneinander beabstandet und zwar dient eine Isolierschicht 5 als Abstandsteil. Die Steuerelektroden 4 sind gewissermaßen auf der einen Oberfläche und die Zuleitungen 6 auf der anderen Oberfläche der Isolierschicht 5 angeordnet.

Eine bevorzugte Dicke der Isolierschicht liegt zwischen 0,05 $\mu$m und 0,1 $\mu$m. Zuleitungen und Steuerelektroden können eine Dicke von 0,025 $\mu$m und 0,1 $\mu$m besitzen.

Das Substrat 1 trägt eine, insbesondere ganzflächige Rückelektrode 3. Zwischen den Steuerelektroden und der Rückelektrode befindet sich die Flüssigkristallschicht, die in ihrem optischen Durchlaßverhalten durch eine zwischen Rückelektrode 3 und Steuerelektrode 4 angelegte elektrische Spannung in einer bekannten Weise veränderbar ist. Der Vollständigkeit halber sei erwähnt, daß üblicherweise auch noch weitere Schichten vorhanden sein können, wie z.B. Passivierungsschichten auf den Oberflächen der Substrate 1 und 2 und Orientierungsschichten auf den an die Flüssigkristallschicht 8 angrenzenden Oberflächen der Elektrodenschichten 3 und 4.

Sämtliche Schichten und Elektroden sollen weitgehend durchsichtig sein. Die elektrisch leitenden Schichten und Elektroden bestehen in bekannter Weise z.B. aus ITO-Schichten (Indium-Tin-Oxid-Schichten). Die Isolierschicht kann z.B. aus $SiO_2$ oder $Si_3N_4$ oder SiC bestehen. Das Aufbringen der Schichten erfolgt nach bekannten Verfahren wie Vakuumaufdampfen, Elektronenstrahlaufdampfen, Sputtern oder fotolithographische Prozesse.

Wie aus der Figur zu ersehen, können die der Zuleitung der Steuerspannungen dienenden Leiterbahnen 6 möglichst dicht nebeneinander liegen und die Oberfläche des Substrats 2 zum größten Teil bedecken. Sie weisen dadurch einen großen Querschnitt und damit einen geringen Leitungswiderstand auf. Die in der anderen Ebene angeordneten Steuerelektroden 4 können ebenfalls minimal voneinander beabstandet sein, da zwischen ihnen keine Leiterbahnen hindurchlaufen müssen.

Die elektrisch leitende Verbindung zwischen einer Steuerelektrode 4 und der ihr zugeordneten Leiterbahn 6 erfolgt durch eine Durchkontaktierung 9 aus elektrisch leitendem Material die sich in einem entsprechenden Durchbruch in der Isolierschicht 5 befindet. Diese Durchkontaktierung 9 kann mit der entsprechenden Steuerelektrode 4 aus einem Teil bestehen. Bei Betrieb der Anzeigevorrichtung ist es zweckmäßig die nicht angesteuerten Steuerelektroden auf ein definiertes Potential, z.B. auf das Potential der Rückelektrode 3 zu legen. Das an den nichtangesteuerten Steuerelektroden 4 anliegende Potential ist jedenfalls so zu wählen, daß die zwischen der Rückelektrode 3 und der nicht angesteuerten Steuerelektrode liegende Spannung unterhalb der Ansprech-(Schwell-)spannung des Flüssigkristallmaterials liegt.

Gemäß einer bevorzugten Weiterbildung der Erfindung ist in die Isolierschicht 5 eine elektrisch leitende Schirmschicht 7 eingebettet, die gegen die Steuerelektroden 4, die Durchkontaktierungen 9 und die Leiterbahnen 6 isoliert ist. Die Schirmschicht kann ggf. zweckmäßig sein, um Bereiche die nicht durch Steuerelektroden bedeckt sind, aber dennoch im Sichtfeld liegen, abzudecken um sicher zu stellen, daß an diesen Stellen keine unerwünschten Anzeigen erfolgen. Zum Einbringen der Schirmschicht 7 wird die Isolierschicht zweckmäßig in zwei Stufen aufgebracht, z.B. wird zunächst eine dünnere Isolierschicht aufgebracht, dann die Schirmschicht 7 aufgebracht und dann eine weitere Isolierteilschicht aufgebracht. Im Betrieb wird an die Schirmschicht zweckmäßig eine Spannung angelegt die kleiner als die Schwellspannung des Flüssigkristallmaterials ist. Bevorzugt erhält sie das gleiche Potential wie die Rückelektrode 3.

Die Vorzüte treten besonders deutlich bei einer Anwendung für Flüssigkristall- Großanzeigen zutage (z.B. öffentlichen Infomationssysteme auf Bahnhöfen, Flugplätzen und Studien usw.), wie nachfolgendes Beispiel zeigt:

EP 0 447 621 B1

|  | Stand der Technik | Erfindungs- gemäße Aus- führung |
|---|---|---|
| Aktive Fläche eines Schrift- zeichens in cm$^2$ | 425,6 | 425,6 |
| max. Zuleitungs- länge in cm | 18,5 | 7,5 |
| Zuleitungs- breite in mm | 0,2 | 0,2 |
| Abstand zwischen zwei Zuleitungen in mm | 0,1 | 0,05 |
| Abstand zwischen 2 Bildpunkten in mm | 1,0 | 0,05 |
| Anzahl der Bild- punkte | 96 | ca. 2200 |

Dieses Ausführungsbeispiel zeigt besonders deutlich, daß bei ähnlichem Stand der Fertigungstechnologien eine - Erhöhung der Bildpunktzahl von 96 auf ca. 2200 unter Beischaltung der zur Verfügung stehenden Anzeige- und Kontaktisierungsfläche zu erreichen ist.

**Patentansprüche**

1.  Flüssigkristallanzeigevorrichtung für statischen Ansteuerbetrieb mit einem eine schichtförmige Rückelektrode (3) aufweisenden Substrat (1) aus Isoliermaterial, einem eine Vielzahl von in einer Ebene liegenden schichtförmigen Steuerelektroden (4) aufweisenden zweiten Substrat (2) aus Isoliermaterial, mit einer zwischen der Rückelektrode und den Steuerelektroden befindlichen Flüssigkristallschicht (8), mit einer Isolierschicht (5) und einer Vielzahl von mit zugeordneten Steuerelektroden elektrischleitend verbundenen schichtförmigen Leiterbahnen, wobei die Leiterbahnen (6) in einer Ebene auf dem zweiten Substrat (2) aufgebracht sind, dadurch gekennzeichnet, daß die Isolierschicht (5) zwischen der Ebene der Steuerelektroden (4) und der Ebene der Leiterbahnen (6) angeordnet ist, daß die Isolierschicht (5) mit Durchbrüchen versehen ist, durch welche sich Kontaktierungen (9) zur elektrischen Verbindung der Leiterbahnen (6) mit den zugeordneten Steuerelektroden (4) hindurch erstrecken, daß in die Isolierschicht (5) eine elektrisch leitende Schirmschicht (7) von den elektrisch leitenden Schichten (4, 6, 9) isoliert eingebettet ist, und daß die Schirmschicht das Potential der Rückelektrode besitzt.

2.  Flüssigkristallanzeigevorrichtung nach Anspruch 1, dadurch gekennzeichnet, daß die von den Leiterbahnen (6) bedeckte Fläche mehr als 20%, vorzugsweise mehr als 35%, insbesondere mehr als 50% und weniger als 95% der Anzeigefläche beträgt.

4

# EP 0 447 621 B1

3. Flüssigkristallanzeigevorrichtung nach Anspruch 1 oder 2, dadurch gekennzeichnet, daß die elektrisch leitenden Schichten (3, 4, 6, 9) und die Isolierschicht (5) weitgehend durchsichtig sind.

4. Flüssigkristallanzeigevorrichtung nach einem der Ansprüche 1-3, dadurch gekennzeichnet, daß die Schirmschicht (7) weitgehend durchsichtig ist.

5. Flüssigkristallanzeigevorrichtung nach einem der Ansprüche 1 bis 4, dadurch gekennzeichnet, daß die Flächen der Steuerelektroden (4) mehr als 80%, insbesondere mehr als 90% und weniger als 99,8% der Anzeigefläche betragen.

6. Flüssigkristallanzeigevorrichtung nach einem der Ansprüche 1 bis 5, gekennzeichnet durch die Ausbildung als Matrix-Anzeigevorrichtung, insbesondere als Punktmatrix-Anzeigevorrichtung.

7. Flüssigkristallanzeigevorrichtung nach einem der Ansprüche 1 bis 6, dadurch gekennzeichnet, daß die Rückelektrode auf dem ersten Substrat 1 ganzflächig ausgebildet ist.

## Claims

1. Liquid crystal display device for static selectably driven operation with a substrate (1) of insulating material and displaying a layer-shaped back electrode (3), with a second substrate (2) of insulating material and displaying a plurality of layer-shaped control electrodes (4) lying in one plane, with a liquid crystal layer (8) disposed between the back electrode and the control electrodes, with an insulating layer (5) and a plurality of layer-shaped conductor tracks which are connected electrically conductively with associated control electrodes, wherein the conductor tracks (6) are applied in one plane on the second substrate (2), characterised thereby, that the insulating layer (5) is arranged between the plane of the control electrodes (4) and the plane of the conductor tracks (6), that the insulating layer (5) is provided with passages, through which contact-making devices (9) extend for the electrical connection of the conductor tracks (6) with the associated control electrodes (4), that an electrically conductive screen layer (7), which insulated from the electrically conductive layers (4, 6, 9) is embedded in the insulating layer (5) and that the screen layer has the potential of the back electrode.

2. Liquid crystal display device according to claim 1, characterised thereby, that the area, which is covered by the conductor tracks (6), amounts to more than 20%, preferably more than 35% and in particular more than 50% and less than 95% of the display area.

3. Liquid crystal display device according to claim 1 or 2, characterised thereby, that the electrically conductive layers (3, 4, 6, 9) and the insulating layer (5) are largely transparent.

4. Liquid crystal display device according to one of the claims 1 to 3, characterised thereby, that the screen layer (7) is largely transparent.

5. Liquid crystal display device according to one of the claims 1 to 4, characterised thereby, that the areas of the control electrodes (4) amount to more than 80% and in particular more than 90% and less than 99.8% of the display area.

6. Liquid crystal display device according to one of the claims 1 to 5, characterised by the construction as matrix display device, in particular as dot matrix display device.

7. Liquid crystal display device according to one of the claims 1 to 6, characterised thereby, that the back electrode is formed over the entire area on the first substrate (1).

## Revendications

1. Dispositif d'affichage à cristal liquide pour exploitation de commande statique, comportant un substrat (1) en matériau isolant, présentant une électrode arrière (3) en forme de couche, un deuxième substrat (2) en matériau isolant, présentant un grand nombre d'électrodes de commande (4) en forme de couche, se trouvant dans un plan, comportant une couche de cristal liquide (8) se trouvant entre l'électrode arrière et les électrodes de commande, comportant une couche isolante (5) et un grand nombre de chemins de conducteur en forme de couche, reliés en conduisant électriquement avec des électrodes de commande associées, les chemins de conducteur (6) étant déposés dans un plan, sur le deuxième substrat (2), caractérisé en ce que la couche isolante (5) est agencée entre le plan des électrodes de commande (4) et le plan des chemins de conducteur (6), que la couche isolante (5) est pourvue de percements, à travers lesquels s'étendent des éléments de mise en contact (9) pour la liaison électrique des chemins de conducteur (6) avec les électrodes de commande (4) associées, que dans la couche isolante (5), une couche d'écran (7) conduisant électriquement est noyée, isolée des couches (4, 6, 9) conduisant électriquement, et en ce que la couche d'écran possède le potentiel de l'électrode arrière.

2. Dispositif d'affichage à cristal liquide selon la revendication 1, caractérisé en ce que la surface couverte par les chemins de conducteur (6) atteint plus de 20 %, de façon préférée plus de 35 %, en particulier plus de 50 % et moins de 95 %, de la surface d'affichage.

3. Dispositif d'affichage à cristal liquide selon la revendication 1 ou la revendication 2, caractérisé en ce que les couches (3, 4, 6, 9) conduisant électriquement et la couche isolante (5) sont, dans une large mesure, transparentes.

4. Dispositif d'affichage à cristal liquide selon une des revendications 1 à 3, caractérisé en ce que la couche d'écran (7) est, dans une large mesure, transparente.

5. Dispositif d'affichage à cristal liquide selon une des revendications 1 à 4, caractérisé en ce que les surfaces des électrodes de commande (4) atteignent plus de 80 %, en particulier plus de 90 % et moins de 99,8 %, de la surface d'affichage.

6. Dispositif d'affichage à cristal liquide selon une des revendications 1 à 5, caractérisé par la constitution comme dispositif d'affichage en matrice, en particulier comme dispositif d'affichage en matrice de points.

7. Dispositif d'affichage à cristal liquide selon une des revendications 1 à 6, caractérisé en ce que l'électrode arrière sur le premier substrat (1) est constituée sur toute la surface.